# EUROPÄISCHE PATENTSCHRIFT

(11) **EP 1 373 053 B1**
(45) Veröffentlichungstag und Bekanntmachung des Hinweises auf die Patenterteilung: **17.12.2008**
(21) Anmeldenummer: 02709998.5
(22) Anmeldetag: 09.01.2002
(51) Int. Cl.: B62D 29/00

(54) **VORRICHTUNG ZUR VERSTÄRKUNG EINES HOHLTEILS EINES FAHRZEUGS**
DEVICE FOR REINFORCING A HOLLOW ELEMENT OF A MOTOR VEHICLE
DISPOSITIF DE RENFORCEMENT D'UN ELEMENT CREUX

(30) Priorität: 16.03.2001 DE 10112688
(43) Veröffentlichungstag der Anmeldung: 02.01.2004
(73) Patentinhaber: Sika AG, vorm. Kaspar Winkler & Co., CH-8048 Zürich (CH)
(72) Erfinder: HASLER, Thomas, CH-8903 Birmensdorf (CH); ZABEL, Lutz, CH-8903 Birmensdorf (CH)
(74) Vertreter: Sika Patent Attorneys
(86) Internationale Anmeldenummer: PCT/EP2002/000120
(87) Internationale Veröffentlichungsnummer: WO 2002/074608

(56) Entgegenhaltungen:
- US-A1- 2001 020 794
- US-B1- 6 189 953
- US-B1- 6 247 287
- US-B1- 6 305 430

## Beschreibung

Die Erfindung betrifft eine Vorrichtung zur Verstärkung eines Hohlteils eines Fahrzeugs, insbesondere einer Karosseriesäule.

Zu diesem Zweck sind im Automobilbau Verstärkungsteile bekannt, welche als Verbundkörper aus einer geometrisch einfachen Tragstruktur und einem schäumbaren Material bestehen. Die Tragstruktur dient dabei in erster Linie zur Halterung und Plazierung des schäumbaren Materials in dem Hohlraum ohne besondere Konturanpassung. Nachfolgend wird der Hohlraum vollvolumig ausgeschäumt, wobei das expandierte Schaummaterial den Wandanschluß und somit die Kraftaufnahme und die Lastverteilung vermittelt. Der Verstärkungseffekt beruht also maßgeblich auf den Materialeigenschaften des Schaumstoffs. Als nachteilig hat sich dabei herausgestellt, daß der Schäumvorgang eine chemische Reaktion erfordert, die auf den Herstellungsprozeß des Fahrzeugs insbesondere hinsichtlich der auftretenden Temperaturen abgestimmt sein muß. Die Verstärkungsfunktion hängt somit von der genauen und gleichbleibenden Einhaltung der Prozeßparameter ab. Ein weiterer Nachteil besteht darin, daß die Strukturteile nicht mehr einfach voneinander trennbar sind und dadurch das Recycling erschweren. Außerdem führt das vollständige Ausschäumen zu einem mehr oder weniger homogenen Verstärkungseffekt, ohne daß räumlich variierenden Designanforderungen Rechnung getragen werden könnte.

Aus der US 6,189,953, die dem nächstliegenden Stand der Technik gemäß Oberbegriff des Anspruchs 1 bildet, sind Verstärkungen für Hohträume bekannt. Die Verstärkungen sind insbesondere als Fachwerkstruktur offenbart, wobei symmetrisch gekreuzte Rippen über eine Steckverbindung miteinander verbunden sind.

Ausgehend hiervon liegt der Erfindung die Aufgabe zugrunde, die vorgenannten Nachteile zu beseitigen und eine Hohlraumverstärkung zu schaffen, welche einfach herstellbar und einsetzbar ist, sich entsprechend den spezifischen Beanspruchungen variabel gestalten läßt, Gewichtseinsparungen ermöglicht und keine besonderen Entsorgungsprobleme bereitet.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, einen Verstärkungskörper als Leichtbauteil frei von lasttragenden Schäumteilen zu schaffen. Dementsprechend wird erfindungsgemäß ein in das Hohlteil einsetzbares langgestrecktes formsteifes Stützskelett aus Kunststoff vorgeschlagen, welches mit der Innenwandung des Hohlteils in Eingriff bringbare freie Stützflächen aufweist. Durch die Kunststoff-Skelettstruktur wird bei weitgehender Gewichtsreduktion eine geometrisch komplexe Formgebung und ein räumlich angepaßtes Verstärkungsverhalten realisierbar, wobei die außenseitigen Stützflächen eine direkte Lastaufnahme erlauben. Das Stützskelett besitzt eine definierte Funktion aufgrund seiner vorgegebenen Baustruktur. Seine Montage kann ohne besonderen Aufwand in den bestehenden Fertigungsablauf des Fahrzeugs eingebunden werden, während eine einfache sortenreine Trennung im Entsorgungsfall möglich ist.

Das Stützskelett weist über seine Länge verteilt eine Mehrzahl von quer zu seiner Längsrichtung sich erstreckende Aussteifungsrippen auf. Dabei sollte gewährleistet sein, daß die Aussteifungsrippen jeweils einen lichten Innenquerschnitt des Hohlteils vorzugsweise vollflächig überspannen, um eine optimale Aussteifung zu erzielen. Ein weiterer Vorteil in dieser Hinsicht ergibt sich dadurch, daß die Aussteifungrippen über Länsträger des Stützskeletts im Abstand voneinander gehalten sind.

Zur Optimierung der Krafteinleitung sind die Randkanten der Aussteifungsrippen und gegebenenfalls der Längsstege unter Bildung der Stützflächen an die Kontur der Innenwandung des Hohlteils angepaßt.

Vorteilhafterweise besitzt das Stützskelett eine der Innenform des Hohlteils entsprechende Hüllkontur, so daß auch bei punktueller Beanspruchung eine weitreichende Lastverteilung erfolgt.

Ein optimales Design wird dadurch ermöglicht, daß das Stützskelett als einstückiges Formteil vorzugsweise als Spritzgußteil ausgebildet ist. Dabei ist es im Hinblick auf die Formbeständigkeit bei der Herstellung und beim Einsatz des Fahrzeugs von Vorteil, wenn das Stützskelett aus einem wärmebeständigen Kunststoff, vorzugsweise aus Polyphenylsulfid als Hochleistungskunststoff oder aus Polyamid besteht.

Vorteilhaft ist es, wenn das Stützskelett mindestens einen, vorzugsweise zwei in seiner Längsrichtung durchgehende, die Aussteifungsrippen quer durchsetzende Längsstege aufweist.

Eine weitere vorteilhafte Ausgestaltung der Erfindung sieht vor, daß die Strukturfestigkeit des Stützskeletts nach Maßgabe einer räumlich variablen Betriebssteifigkeit und/oder Crash-Beanspruchung angepaßt bzw. modelliert ist. Dies läßt sich entsprechend dem gewünschten Deformationsverhalten dadurch erreichen, daß die Wandstärke, der gegenseitige Abstand und/oder die Orientierung der Aussteifungsrippen und/oder Längsstege über das Stützskelett variieren.

Zur strukturoptimierten Gewichtseinsparung ist es von Vorteil, wenn das Stützskelett eine Vielzahl von durch die Aussteifungsrippen in Längsrichtung des Stützskeletts voneinander getrennte, in einer Querrichtung offene Hohlkammern aufweist.

Vorteilhafterweise besitzen die Aussteifungsrippen über die Längsstege seitlich nach außen hinausstehende Schulterpartien.

Eine weitere vorteilhafte Ausführung sieht vor, daß das Stützskelett Aussparungen für in das Hohlteil integrierte Funktionsteile, beispielsweise Gurtroller aufweist.

Zur unmittelbaren Krafteinleitung bzw. Abstützung kann das Stützskelett an seinen Stützflächen formschlüssig an die Innenwandung des Hohlteils anliegen. Um die Betriebssteifigkeit weiter zu verbessern, ist es günstig, wenn das Stützskelett über vorzugsweise an seinen Stützflächen schichtförmig applizierte Verbindungsmittel kraft- und/oder stoffschlüssig mit der Innenwandung des Hohlteils in Eingriff bringbar ist, wofür ein vorzugsweise unter Wärmeeinwirkung aktivierbarer Klebstoff oder klebender Schaumstoff von Vorteil ist. Ergänzend oder alternativ kann das Stützskelett über gesonderte mechanische Verbindungsmittel in dem Hohlteil fixiert sein.

Eine Zusatzfunktion wird dadurch erreicht, daß an dem Stützskelett aufschäumbare Schäumteile zur Abdichtung bzw. Abschottung eines Querschnitts des Hohlteils angeordnet sind.

Bei längeren Hohlteilen können mehrere Stützskelette hintereinander angeordnet sein, Toleranzprobleme zu vermeiden. Gegebenenfalls können die Stützskelette vorzugsweise über Steck- oder Gelenkverbindungen endseitig miteinander gekoppelt sein.

Ein weiterer Erfindungsaspekt betrifft ein Strukturteil eines Fahrzeugs bestehend aus einem Hohlteil und mindestens einem darin eingesetzten erfindungsgemäßen Stützskelett.

Im folgenden wird die Erfindung anhand eines in der Zeichnung in schematischer Weise dargestellten Ausführungsbeispiels näher erläutert. Es zeigen
- Fig. 1: ein Stützskelett zum Einsetzen in eine B-Säule eines Kraftfahrzeugs in einer perspektivischen Ansicht;
- Fig. 2: eine Seitenansicht des Stützskeletts nach Fig. 1;
- Fig. 3: das in die B-Säule formschlüssig eingesetzte Stützskelett in einer perspektivischen Ansicht;
- Fig. 4: einen Vertikalschnitt durch die abgebrochen dargestellte Innenwandung der B-Säule und das darin eingesetzte Stützskelett;
- Fig. 5 bis 7: einen Schnitt entlang der entsprechend numerierten Schnittlinien der Fig. 4.

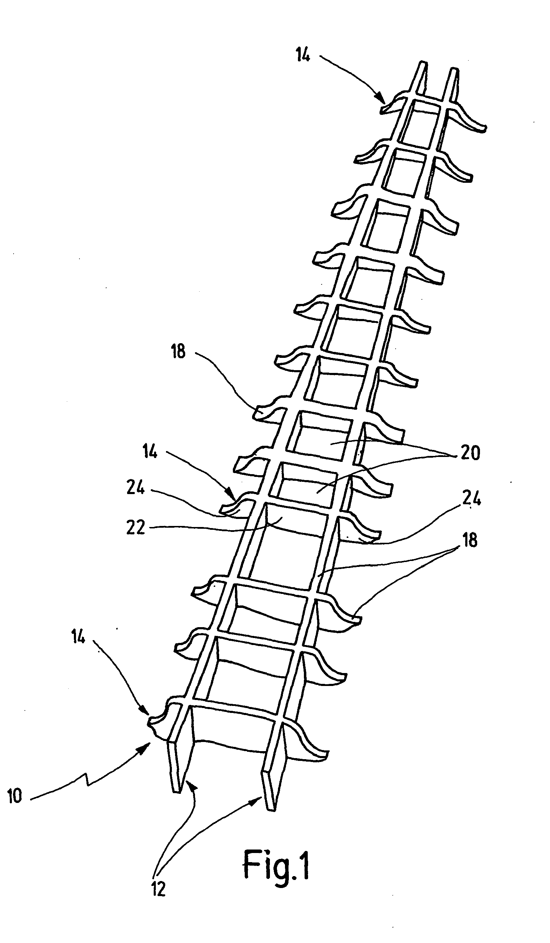

Die in Fig. 1 gezeigte langgestreckte Stützskelett 10 besteht als einstückiges Kunststoff-Formteil aus zwei in Skelettlängsrichtung parallel zueinander verlaufenden Längsstegen 12 und einer Mehrzahl von quer dazu sich erstrekkenden, im seitlichen voneinander befindlichen Aussteifungsrippen 14. Die durch das Stützskelett 10 aufgespannte Hüllkontur entspricht der Innenform der B-Säule 16 oder allgemein eines Hohlteils eines nicht eigens dargestellten Fahrzeugs. Im eingesetzten Zustand ermöglicht das Stützskelett 10 somit eine Strukturverstärkung und insbesondere eine den Belastungsanforderungen angepaßte Aussteifung.

Zu diesem Zweck bilden die Aussteifungsrippen 14 und die Längsstege 12 mit ihren Rändern nach außen weisende freie Stützflächen bzw. Stützkanten 18, die mit dem Hohlteil innenseitig punktuell oder linienförmig in Eingriff bringbar sind. Um räumlich variierenden Festigkeitsanforderungen an das Stützskelett 10 zu genügen, sind die Wandstärke und der gegenseitige Abstand zumindest der Aussteifungsrippen 14 entsprechend angepaßt, d.h. über das Stützskelett abschnittsweise unterschiedlich ausgebildet. Die konstruktive Gestaltung erfolgt dabei nach Maßgabe einer rechnerischen oder experimentellen Analyse der Betriebs- und Crashbeanspruchungen des Fahrzeugs.

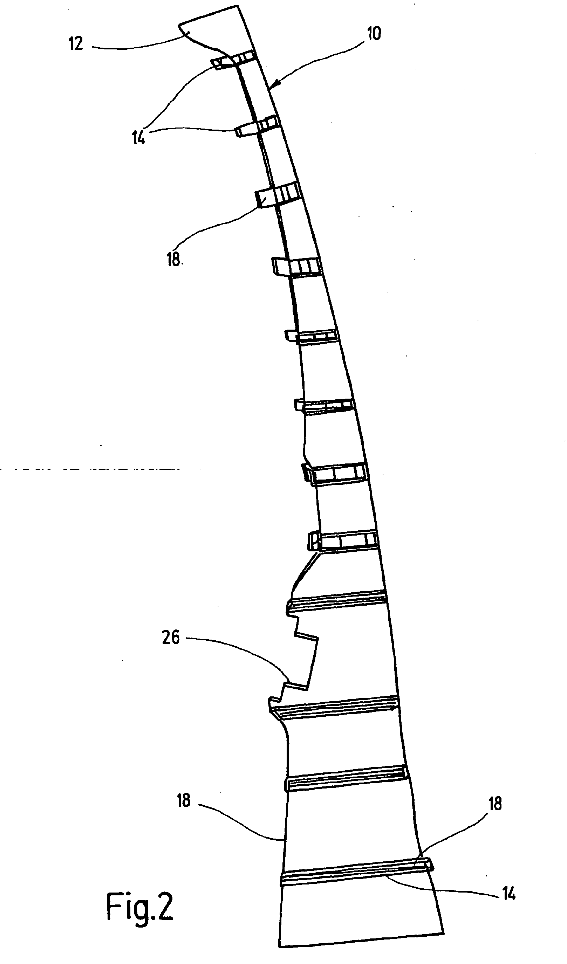

Das Stützskelett 10 weist in Leichtbauweise eine Vielzahl von in SkelettLängsrichtung reihenförmig angeordnete, quer dazu offenen Hohlkammern 20 auf, welche durch die Aussteifungsrippen 14 und die Längsstege 12 fachwerkartig voneinander getrennt sind. Um auch komplexe Hohlraumquerschnitte vollflächig überspannen zu können, weisen die Aussteifungsrippen 14 zwischen den Längsstegen 12 sich erstreckende Zentralabschnitte 22 und über die Längsstege 12 seitlich hinauskragende Schulterpartien 24 auf. Zur Aufnahme von in das Hohlteil integrierten Funktionsteile, beispielsweise einem nicht gezeigten Gurtroller, ist das Stützskelett 10 mit entsprechenden Aussparungen 26 versehen (Fig. 2).

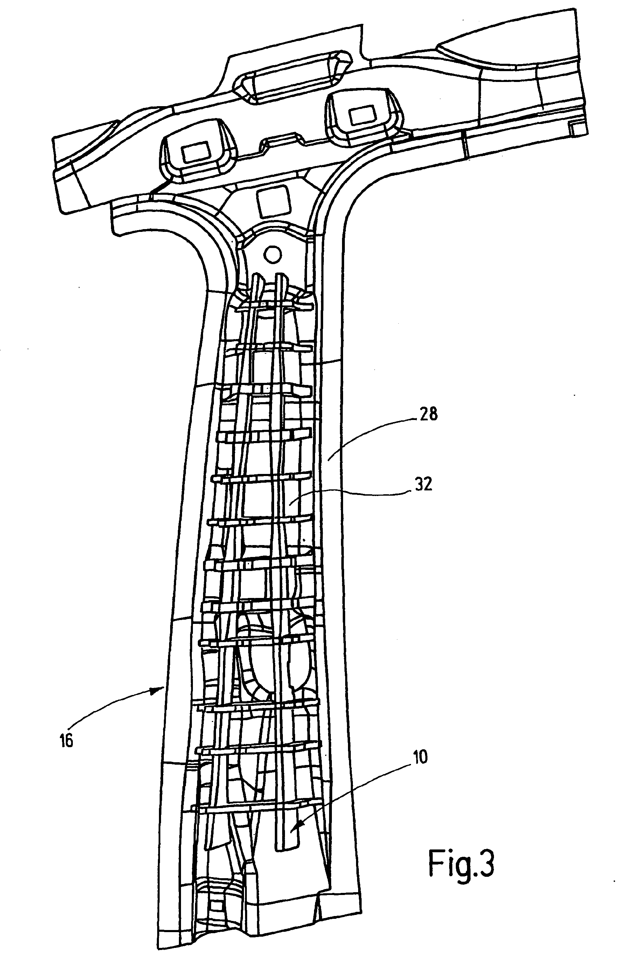

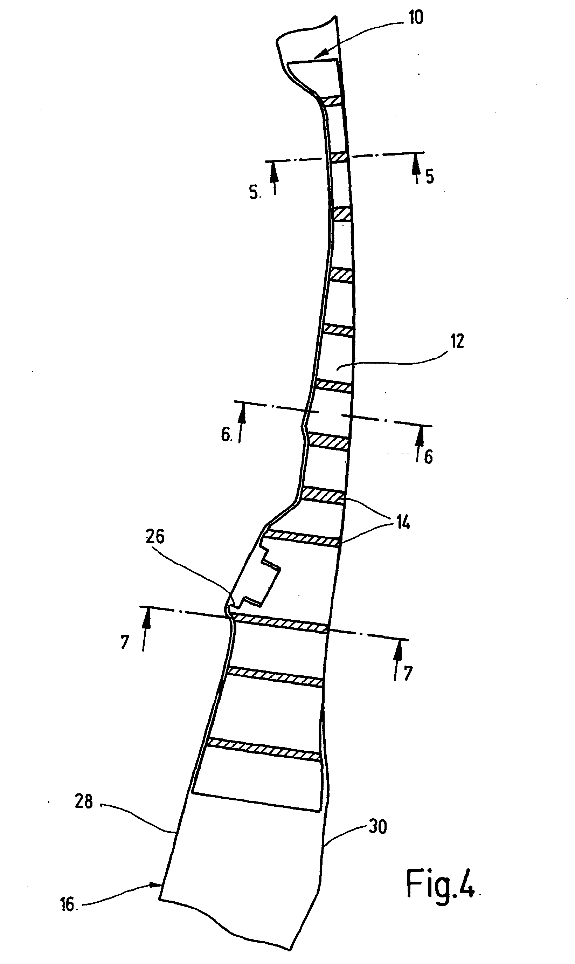

Wie am besten aus Fig. 3 ersichtlich, läßt sich das Stützskelett 10 in das komplementär geformte, nach außen offene Blechteil 28 der B-Säule 16 einsetzen. Gegebenenfalls können nicht gezeigte mechanische Befestigungsmittel zur zusätzlichen Fixierung vorgesehen sein. Im Zuge der weiteren Fahrzeugmontage wird die B-Säule durch ein außenseitiges Blechteil 30 unter Einschluß des Stützskeletts 10 geschlossen. Die Blechteile 28, 30 bilden dabei die geometrisch komplex geformte Innenwandung 32 der B-Säule 16 (Fig. 4).

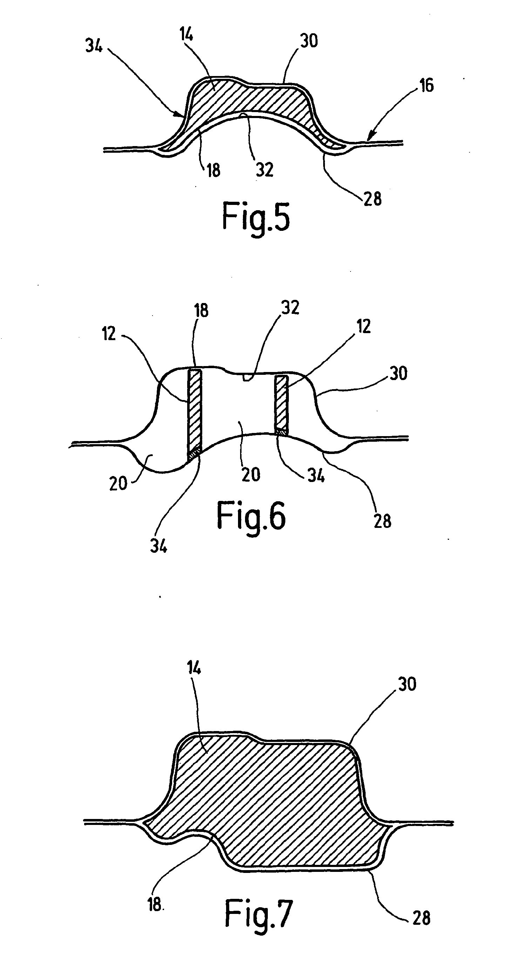

Fig. 5 bis 7 zeigen Querschnitte in verschiedenen Höhen durch das aus der den Blechteilen 28, 30 und dem darin angeordneten Stützskelett 10 gebildete Strukturteil 34. Die Aussteifungsrippen 14 ermöglichen mit ihren Stützkanten 18 eine umlaufende Abstützung über die jeweilige Querschnittskontur der Innenwandung 32, während die Stützkanten 18 der Längsstege 12 der Längskontur des Hohlteils 16 folgen. Auf diese Weise können auch punktuell auftretende Knick- und Stauchbelastungen aufgenommen und über große Stützweiten über das Stützskelett 10 abgeleitet werden.

Grundsätzlich ist es möglich, daß das Stützskelett 10 über zweckmäßig an seinen Stützkanten 18 insbesondere stellenweise applizierte Verbindungsmittel kraft- und/oder stoffschlüssig mit der Innenwandung 32 verbunden wird. Zu diesem Zweck kann gemäß Fig. 5 ein unter Wärmeeinwirkung schäumbares Material 34 vorgesehen sein, beispielsweise ein Schaumstoff auf Polyethylen-Basis. Dadurch lassen sich etwaige Toleranzen und Wärmedehnungen ausgleichen und es kann eine sichere und klapperfreie Verbindung erreicht werden. Vorteilhafterweise erfolgt das Ausschäumen während einer nachfolgenden Aufheizung der Fahrzeugkarosserie beispielsweise bei der Kataphorese-Beschichtung. Selbstverständlich muß gewährleistet sein, daß das Stützskelett 10 aus einem entsprechend temperaturbeständigen Werkstoff besteht, um den dabei auftretenden Temperaturen von ca. 150 bis 190°C standzuhalten.

Stützskelette der vorstehend beschriebenen Art lassen sich bevorzugt in Karosseriesäulen, aber auch Rahmenteilen, Dachholmen, Motorträgem oder Fahrwerkteilen von Kraftfahrzeugen ohne nennenswerten Montageaufwand einsetzen, um bei geringem Gewicht eine sehr wirksame Versteifung zu erzielen. Dabei kann die konstruktive Gestaltung lokal unterschiedlichen Festigkeitsanforderungen Rechnung tragen, was sich insbesondere bei solchen Hohlteilen vorteilhaft erweist, die aus Gründen der Gewichtsersparnis durch Blechteile unterschiedlicher Wandstärke gebildet sind.

## Patentansprüche

1. Vorrichtung zur Verstärkung eines langgestreckten Hohlteils (16) eines Fahrzeugs, insbesondere einer Karosseriesäule, bestehend aus mindestens einem in das Hohlteil (16) einsetzbaren langgestreckten formsteifen Stützskelett (10) aus Kunststoff, welches mit der Innenwandung (32) des Hohlteils (16) in Eingriff bringbare freie Stützflächen (18) aufweist, **dadurch gekennzeichnet, daß** das als einstückiges Formteil ausgebildete Stützskelett (10) über seine Länge verteilt eine Mehrzahl von quer zu seiner Längsrichtung sich erstreckende, über Längsträger (12) des Stützskeletts (10) im Abstand voneinander gehaltene Aussteifungsrippen (14) aufweist, wobei die Längsträger (12) in Längsrichtung des Hohlteils (16) verlaufen und wobei die Aussteifungsrippen (14) jeweils einen lichten Innenquerschnitt des Hohlteils (16) vollflächig überspannen und mit ihren Randkanten als Stützflächen (18) umlaufend an die Kontur der Innenwandung (32) des Hohlteils (16) angepaßt sind.

2. Vorrichtung nach Anspruch 1, **dadurch gekennzeichnet, daß** das Stützskelett (10) eine der Innenform des Hohlteils (16) entsprechende Hüllkontur aufweist.

3. Vorrichtung nach Anspruch 1 oder 2, **dadurch gekennzeichnet, daß** das Stützskelett (10) als Spritzgußteil ausgebildet ist.

4. Vorrichtung nach einem der Ansprüche 1 bis 3, **dadurch gekennzeichnet, daß** das Stützskelett (10) aus einem wärmebeständigen Kunststoff, vorzugsweise Polyphenylsulfid besteht.

5. Vorrichtung nach einem der Ansprüche 1 bis 4, **dadurch gekennzeichnet, daß** das Stützskelett (10) mindestens einen, vorzugsweise zwei in seiner Längsrichtung durchgehende, die Aussteifungsrippen (14) quer durchsetzende Längsstege (12) aufweist.

6. Vorrichtung nach einem der Ansprüche 1 bis 5, **dadurch gekennzeichnet, daß** die Strukturfestigkeit des Stützskeletts (10) nach Maßgabe einer räumlich variablen Betriebssteifigkeit und/oder Crash-Beanspruchung angepaßt ist.

7. Vorrichtung nach einem der Ansprüche 1 bis 6, **dadurch gekennzeichnet, daß** die Wandstärke, der gegenseitige Abstand und/oder die Orientierung der Aussteifungsrippen (14) und/oder Längsstege (12) über das Stützskelett (10) variieren.

8. Vorrichtung nach einem der Ansprüche 1 bis 7, **dadurch gekennzeichnet, daß** das Stützskelett (10) eine Vielzahl von durch die Aussteifungsrippen (14) in Längsrichtung des Stützskeletts (10) voneinander getrennte, in einer Querrichtung offene Hohlkammern (20) aufweist.

9. Vorrichtung nach einem der Ansprüche 1 bis 8, **dadurch gekennzeichnet, daß** die Aussteifungsrippen (14) über die Längsstege (12) seitlich nach außen hinausstehende Schulterpartien (24) aufweisen.

10. Vorrichtung nach einem der Ansprüche 1 bis 9, **dadurch gekennzeichnet, daß** das Stützskelett (10) Aussparungen (26) für in das Hohlteil (16) integrierte Funktionsteile, beispielsweise Gurtroller aufweist.

11. Vorrichtung nach einem der Ansprüche 1 bis 10, **dadurch gekennzeichnet, daß** das Stützskelett (10) an seinen Stützflächen (18) formschlüssig an die Innenwandung (32) des Hohlteils (16) anliegt.

12. Vorrichtung nach einem der Ansprüche 1 bis 11, **dadurch gekennzeichnet, daß** das Stützskelett (10) über vorzugsweise an seinen Stützflächen (18) schichtförmig applizierte Verbindungsmittel (34) kraft- und/oder stoffschlüssig mit der Innenwandung (32) des Hohlteils (16) in Eingriff bringbar ist.

13. Vorrichtung nach Anspruch 12, **dadurch gekennzeichnet, daß** ein Klebstoff oder klebender Schaumstoff als Verbindungsmittel (34) vorgesehen ist.

14. Vorrichtung nach Anspruch 13, **dadurch gekennzeichnet, daß** der Klebstoff oder klebende Schaumstoff unter Wärmeeinwirkung aktivierbar ist.

15. Vorrichtung nach einem der Ansprüche 1 bis 14, **dadurch gekennzeichnet, daß** das Stützskelett (10) über gesonderte mechanische Verbindungsmittel in dem Hohlteil (16) fixierbar ist.

16. Vorrichtung nach einem der Ansprüche 1 bis 15, **dadurch gekennzeichnet, daß** an dem Stützskelett (10) aufschäumbare Schäumteile zur Abdichtung bzw. Abschottung eines Querschnitts des Hohlteils (16) angeordnet sind.

17. Vorrichtung nach einem der Ansprüche 1 bis 16, **dadurch gekennzeichnet, daß** mehrere Stützskelette (10) über die Länge des Hohlteils (16) verteilt angeordnet sind.

18. Vorrichtung nach Anspruch 17, **dadurch gekennzeichnet, daß** die Stützskelette (10) vorzugsweise über Steck- oder Gelenkverbindungen endseitig aneinander gekoppelt sind.

19. Strukturteil eines Fahrzeugs bestehend aus einem Hohlteil (16) und mindestens einem darin eingesetzten Stützskelett (10) nach einem der vorhergehenden Ansprüche.

## Claims

1. A device for reinforcing a elongated hollow element (16) of a vehicle, in particular of a vehicle-body pillar, comprising at least one elongated, rigid-shaped supporting skeleton (10) of plastic, which is insertable into the hollow element (16) and has free support faces (18) that can be brought into engagement with the inner wall (32) of the hollow element (16), **characterized in that** the supporting skeleton (10), which is embodied as an integral molded part, has, distributed over its length, a plurality of bracing rips (14) extending transversely to its longitudinal direction, which are kept spaced apart from one another via longitudinal struts (12) of the supporting skeleton (10), whereby the longitudinal struts (12) run in the longitudinal direction of the hollow element (16) and whereby the bracing ribs (14) each span an internal cross section over the full area of the hollow element (16), and whereby the peripheral edges of the bracing ribs (14) are adapted, as support faces (18), to the contour of the inner wall (32) of the hollow element (16).

2. The device of claim 1, **characterized in that** the supporting skeleton (10) has an envelope contour corresponding to the inside shape of the hollow element (16).

3. The device of claim 1 or 2, **characterized in that** the supporting skeleton (10) is embodied as an injection-molded part.

4. The device of one of claims 1-3, **characterized in that** the supporting skeleton (10) comprises a heat-resistant plastic, preferably polyphenyl sulfide.

5. The device of one of claims 1-4, **characterized in that** the supporting skeleton (10) has at least one and preferably two longitudinal struts (12) that are continuous in its longitudinal direction and transversely penetrate the bracing ribs (14).

6. The device of one of claims 1-5, **characterized in that** the structural strength of the supporting skeleton (10) is adapted in accordance with the specification of a three-dimensionally variable operative stiffness and/or crash stress.

7. The device of one of claims 1-6, **characterized in that** the wall thickness, the mutual spacing, and/or the orientation of the bracing ribs (14) and/or longitudinal struts (12) varies over the supporting skeleton (10).

8. The device of one of claims 1-7, **characterized in that** the supporting skeleton (10) has a plurality of hollow chambers (20), which are separated from one another in the longitudinal direction of the supporting skeleton (10) by the bracing ribs (14) and are open in a transverse direction.

9. The device of one of claims 1-8, **characterized in that** the bracing ribs (14) have shoulder portions (24) protruding to the outside laterally past the longitudinal struts (12).

10. The device of one of claims 1-9, **characterized in that** the supporting skeleton (10) has recesses (26) for functional parts, such as belt rollers, that are integrated with the hollow element (16).

11. The device of one of claims 1-10, **characterized in that** the supporting skeleton (10) rests by positive engagement at its support faces (18) against the inner wall (32) of the hollow element (16).

12. The device of one of claims 1-11, **characterized in that** the supporting skeleton (10) can be brought into nonpositive and/or material engagement with the inner wall (32) of the hollow element (16) via connecting means (34) that are preferably applied in layers to its support faces (18).

13. The device of claim 12, **characterized in that** an adhesive or an adhesive foam is provided as the connecting means (34).

14. The device of claim 13, **characterized in that** the adhesive foam is activatable by the action of heat.

15. The device of one of claims 1-14, **characterized in that** the supporting skeleton (10) is fixable in the hollow element (16) via separate mechanical connecting means.

16. The device of one of claims 1-15, **characterized in that** foamable foam parts are disposed on the supporting skeleton (10) for sealing off or partitioning off a cross section of the hollow element (16).

17. The device of one of claims 1-16, **characterized in that** a plurality of supporting skeletons (10) are distributed over the length of the hollow element (16).

18. The device of claim 17, **characterized in that** the supporting skeletons (10) are coupled to one another at the ends, preferably via plug-in or articulated connections.

19. A structural part of a vehicle, comprising a hollow element (16) and at least one supporting skeleton, inserted into it, of one of the foregoing claims.

## Revendications

1. Dispositif de renforcement d'un élément creux allongé (16) d'un véhicule, en particulier d'une colonne de carrosserie, constitué d'au moins un squelette de support (10) en plastique de forme rigide, allongé, pouvant être inséré dans l'élément creux (16), qui présente des surfaces de support libres (18) pouvant être amenées en prise avec la paroi interne (32) de l'élément creux (16), **caractérisé en ce que** le squelette de support (10) réalisé sous forme de pièce moulée d'une seule pièce présente, répartie sur sa longueur, une pluralité de nervures de renforcement (14) s'étendant transversalement à sa direction longitudinale, espacées les unes des autres par des supports longitudinaux (12) du squelette de support (10), les supports longitudinaux (12) s'étendant dans la direction longitudinale de l'élément creux (16) et les nervures de renforcement (14) surmontant à chaque fois sur toute la surface une petite section transversale interne de l'élément creux (16) et étant adaptées par la périphérie de leurs arêtes latérales servant de surfaces de support (18), au contour de la paroi interne (32) de l'élément creux (16).

2. Dispositif selon la revendication 1, **caractérisé en ce que** le squelette de support (10) présente un contour d'enveloppe correspondant à la forme interne de l'élément creux (16).

3. Dispositif selon la revendication 1 ou 2, **caractérisé en ce que** le squelette de support (10) est réalisé sous la forme d'une pièce moulée par injection.

4. Dispositif selon l'une quelconque des revendications 1 à 3, **caractérisé en ce que** le squelette de support (10) se compose d'un plastique résistant à la chaleur, de préférence du sulfure de polyphényle.

5. Dispositif selon l'une quelconque des revendications 1 à 4, **caractérisé en ce que** le squelette de support (10) présente au moins une partie longitudinale (12), de préférence deux, continues dans la direction longitudinale et coupant transversalement les nervures de renforcement (14).

6. Dispositif selon l'une quelconque des revendications 1 à 5, **caractérisé en ce que** la solidité structurelle du squelette de support (10) est adaptée en fonction d'une solidité fonctionnelle et/ou d'une contrainte en cas de collision variables spatialement.

7. Dispositif selon l'une quelconque des revendications 1 à 6, **caractérisé en ce que** l'épaisseur de paroi, la distance mutuelle et/ou l'orientation des nervures de renforcement (14) et/ou des parties longitudinales (12) varient sur le squelette de support (10).

8. Dispositif selon l'une quelconque des revendications 1 à 7, **caractérisé en ce que** le squelette de support (10) présente une pluralité de chambres creuses (20) ouvertes dans une direction transversale, séparées les unes des autres par les nervures de renforcement (14) dans la direction longitudinale du squelette de support (10).

9. Dispositif selon l'une quelconque des revendications 1 à 8, **caractérisé en ce que** les nervures de renforcement (14) présentent des parties d'épaulement (24) saillant latéralement vers l'extérieur au-delà des parties longitudinales (12).

10. Dispositif selon l'une quelconque des revendications 1 à 9, **caractérisé en ce que** le squelette de support (10) présente des évidements (26) pour les pièces fonctionnelles intégrées dans l'élément creux (16), par exemple des enrouleurs de ceinture.

11. Dispositif selon l'une quelconque des revendications 1 à 10, **caractérisé en ce que** le squelette de support (10) s'applique au niveau de ses surfaces de support (18) par engagement positif contre la paroi interne (32) de l'élément creux (16).

12. Dispositif selon l'une quelconque des revendications 1 à 11, **caractérisé en ce que** le squelette de support (10) peut être amené en prise par le biais de moyens de connexion (34) appliqués en forme de couches de préférence au niveau de ses surfaces de support (18), par engagement par force et/ou positif avec la paroi interne (32) de l'élément creux (16).

13. Dispositif selon la revendication 12, **caractérisé en ce que** l'on prévoit un adhésif ou une mousse adhésive en tant que moyen de connexion (34).

14. Dispositif selon la revendication 13, **caractérisé en ce que** l'adhésif ou la mousse adhésive peut être activé(e) sous l'effet de la chaleur.

15. Dispositif selon l'une quelconque des revendications 1 à 14, **caractérisé en ce que** le squelette de support (10) peut être fixé dans l'élément creux (16) par le biais de moyens de connexion mécaniques séparés.

16. Dispositif selon l'une quelconque des revendications 1 à 15, **caractérisé en ce que** l'on dispose sur le squelette de support (10) des pièces en mousse pouvant être moussées pour étancher ou fermer une section transversale de l'élément creux (16).

17. Dispositif selon l'une quelconque des revendications 1 à 16, **caractérisé en ce que** plusieurs squelettes de support (10) sont répartis sur la longueur de l'élément creux (16).

18. Dispositif selon la revendication 17, **caractérisé en ce que** les squelettes de support (10) sont de préférence accouplés les uns contre les autres du côté des extrémités par le biais de connexions enfichables ou articulées.

19. Pièce structurelle d'un véhicule constituée d'un élément creux (16) et d'au moins un squelette de support (10) inséré dans celui-ci, selon l'une quelconque des revendications précédentes.
